(19) **Europäisches Patentamt**
**European Patent Office**
**Office européen des brevets**

(11) **EP 1 581 359 B1**

(12) **EUROPEAN PATENT SPECIFICATION**

(45) Date of publication and mention
of the grant of the patent:
**10.08.2011 Bulletin 2011/32**

(51) Int Cl.:
**B23K 9/00** *(2006.01)* **B23K 10/02** *(2006.01)*

(21) Application number: **03772614.8**

(22) Date of filing: **12.11.2003**

(86) International application number:
**PCT/IL2003/000953**

(87) International publication number:
**WO 2004/043639 (27.05.2004 Gazette 2004/22)**

(54) **MIG-PLASMA WELDING**

PLASMA-METALL-SCHUTZGASSCHWEISSEN

SOUDAGE MIG-PLASMA

(84) Designated Contracting States:
**AT BE BG CH CY CZ DE DK EE ES FI FR GB GR HU IE IT LI LU MC NL PT RO SE SI SK TR**

(30) Priority: **12.11.2002 US 425271 P**

(43) Date of publication of application:
**05.10.2005 Bulletin 2005/40**

(73) Proprietor: **Plasma Laser Technologies Ltd.**
**Yokneam 20692 (IL)**

(72) Inventors:
• **IGNATCHENKO, Georgiy**
**Troy, MI 48084 (US)**

• **DYKHNO, Igor**
**West Bloomfiled, MI 48322 (US)**

(74) Representative: **Modiano, Micaela Nadia et al**
**Modiano Josif Pisanty & Staub Ltd**
**Thierschstrasse 11**
**80538 München (DE)**

(56) References cited:
| | |
|---|---|
| JP-A- 56 004 380 | US-A- 2 756 311 |
| US-A- 3 519 780 | US-A- 3 549 857 |
| US-A- 3 549 857 | US-A- 3 627 204 |
| US-A- 4 291 220 | US-A- 5 990 446 |
| US-A1- 2003 183 604 | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a system for welding a workpiece and a method of welding a workpiece according to the preamble of claims 1 and 4 respectively (see, for example, US 4 291 220), and more particularly to a combination of Metal-Inert-Gas (MIG) welding and Plasma Arc welding.

MIG Welding technology has been widely known for many years and is broadly used in industrial applications.

The MIG process, also known as Gas Metal Arc Welding (GMAW), incorporates automatic feeding of a continuous consumable electrode, the consumable electrode being shielded from the atmosphere by externally supplied gas. Of special importance is the transfer of metal from the consumable electrode to the workpiece. The transfer may occur via any one of the following three basic modes:

(a) Short-circuiting transfer;
(b) Globular transfer; and
(c) Spray transfer.

Mode (a), short-circuiting transfer, is characterized by the low welding currents and small electrode diameters. Metal is transferred only while the electrode is in contact with the weld pool. No metal is conveyed across the arc gap. This mode is suitable mostly for joining thin sections and for bridging large root openings. Processing speed and resulting overall process productivity are very low, and penetration is shallow.

Mode (b), globular transfer, is characterized by transfer of drops of metal with diameter greater than the diameter of the electrode. Gravity has a very significant effect upon these large drops, limiting successful welding to workpieces that lie substantially horizontally beneath the welding arc. In addition, if the arc length is too short, as occurs when the voltage is close to the short-circuiting transfer voltage, the large drops may cause a short between the electrode and the workpiece, thus producing considerable spatter. The arc must therefore be long enough to prevent such shorting. However, a weld made using higher voltage is often unacceptable because of lack of fusion, insufficient penetration and excessive deposition of unneeded metal. These characteristics significantly limit the use of the globular transfer mode in production applications.

Mode (c), spray transfer mode, is possible in argon-rich shielding gas. The spray is a highly directed stream of discrete drops, the drops being accelerated by arc forces sufficiently strong to overcome the effects of gravity. Spray transfer mode is possible if the arc current is higher than the so-called transition current, the value of which depends on wire diameter and type of material. Operating in spray transfer mode is highly desirable.

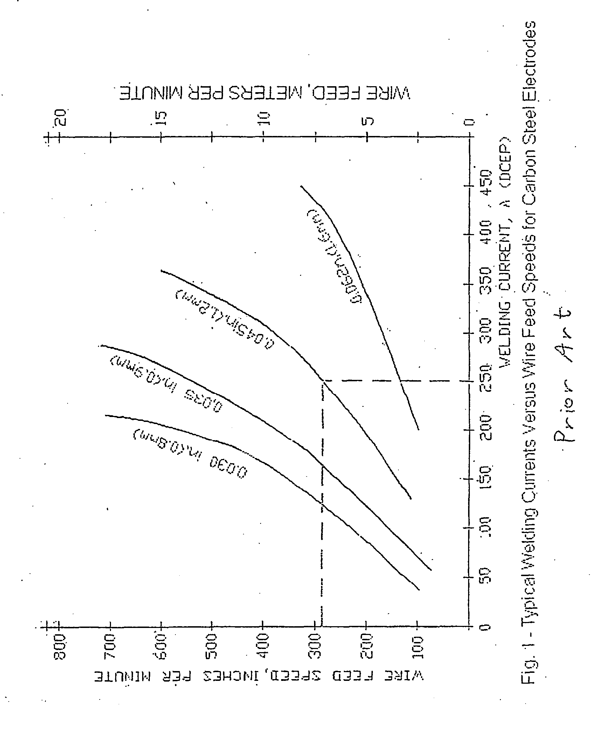

However, the high deposition rate typical of the spray transfer mode may produce a weld pool too large to be supported by surface tension in vertical or overhead positions. As illustrated in the graph of Figure 1, the deposition rate increases as welding current increases, and the rate of increase increases as welding current increases. This leads to excessive electrode melting and excessive consumption of filler metal.

The above considerations limit welding speed and the thickness of the material that may be welded in one pass when operating in any of these three modes, leading to the need for multipass welding with different groove types. In addition, the large welding pool produces a high level of welding distortion.

If the rate of heat transfer to the workpiece can be accelerated without increasing the filler metal deposition rate, penetration depth and welding speed can be dramatically increase.

A combination of commonly used MIG welding with plasma welding can improve welding fusion and increase productivity.

In US Patent No. 3,612,807, A.J. Lifkens and W.G.Essers present a method and apparatus for plasma welding witch axial feeding of filler wire. This work has been further developed, as seen in further US Patents, Nos. 4,016,397, 4,039,800, 4,220,844, 4,205,215, 4,234,778, and 4,142,090. Figure 2 shows a typical embodiment of the apparatus presented in the above-mentioned US Patent No. 3,612,807. A first arc (plasma arc) 21 is maintained between non-consumable electrode 20 and workpiece 12 within a gas stream flowing from gas inlet 9. Plasma stream 15 is constricted by nozzle 6. Plasma stream 15 passes through constricting nozzle 6 and continues within stream 22 towards workpiece 12. Consumable electrode 3 is guided into stream 22 coaxially therewith, and a second arc (MIG arc) is maintained between the end of consumable electrode 3 and workpiece 12. The end of consumable electrode 3 and the MIG arc are both immersed in plasma stream 22.

Careful consideration of this prior-art arrangement, as well as of the physics behind this prior-art invention, clearly shows that to achieve the claimed goal of the invention, as well as for the welding head to be operational, electrode 3 and electrode 20 must both be of the same polarity, either both positive or both negative.

Indeed, if the electrodes 3 and 20 are of different polarities, electrical discharge immediately occurs between these electrodes 3 and 20, and hence electric current does not pass through the workpiece 12 and no melting of workpiece 12 by the arc takes place. Furthermore, due to the axial feeding of filler wire 3, filler wire 3 has a long region of contact with the plasma arc, leading to additional heating of filler wire 3. This results in extremely high deposition rates, without actual penetration of workpiece 12.

In the case where both electrodes 3 and 20 are of positive polarity the operational window for the plasma arc current is limited to a maximum of approximately 100 amperes, due to the risk of overheating the non-consumable electrode 20. The above effect is widely known for regular plasma arc welding when plasma electrode 20 is of positive polarity. This results in shallow penetration and only allows a relatively slow welding speed. It is possible to increase the deposition rate only by increasing the MIG current, and deep penetration welds are not obtained.

It is much more desirable that plasma arc electrode 20 be negative, as this is the normally used polarity for plasma arc welding. See for example, American Welding Society Welding Handbook, Eighth Edition, American Welding Society, 1991, Chapter 10, Plasma Arc Welding, which is incorporated by reference for all purposes as if fully set forth herein. However, a MIG arc of negative polarity tends to be very unstable, this instability being a widely known and well-investigated issue for the MIG welding process. See for example, American Welding Society Welding Handbook, Eighth Edition, American Welding Society, 1991, Volume 2, which is incorporated by reference for all purposes as if fully set forth herein, particularly page 119. Furthermore, negative polarity causes the MIG consumable electrode 3 to melt at a higher rate than when the MIG electrode 3 is of positive polarity. Thus, as in the case when both electrodes 3 and 20 are of positive polarity, the result when both electrodes 3 and 20 are of negative polarity will be increased deposition rates, rather than increased penetration and welding speed.

Summing up the above, it can be concluded that a design according to the above-mentioned US Patent No. 3,612,807 will not allow an increase of either penetration depth or welding speed, or both. Therefore, it would be impossible to achieve high speed welding of thin sheets or thick section welding without grooving, which are the main disadvantages of MIG or Plasma arc welding alone.

There is thus a widely recognized need for, and it would be highly advantageous to have, a system for welding that provides the benefits of both plasma welding and MIG welding, and where the MIG wire does not traverse a longer portion of the plasma are than necessary, and where the plasma are is of negative polarity and the MIG arc is of positive polarity. Such a system will allow deep penetration welds with a minimum of workpiece preparation.

SUMMARY OF THE INVENTION

According to the present invention there is provided a system for welding a workpiece, the system including: the features of claim 1.

According to the present invention, the system further includes: (d) a power source operative to impose upon the first electrode a first electrical potential relative to the workpiece, the power source also operative to impose upon the second electrode a second electrical potential relative to the workpiece, the second electrical potential opposite in polarity to the first electrical potential.

According to the present invention, in the system, the power source includes a second direct-current power supply, the second direct-current power supply having a positive terminal, the second direct-current power supply also having a negative terminal, and wherein the positive terminal of the second power supply is connected to the second electrode and wherein the negative terminal of the second power supply is for connecting to the workpiece.

Preferably, in the system, the second direct-current power supply includes a substantially constant-voltage power supply.

Preferably, in the system, the second direct-current power supply includes a pulsed direct-current power supply.

According to the present invention, in the system, the power source includes: (i) an alternating-current power supply having a first terminal and having a second terminal, the first terminal and the second terminal differing in phase; (ii) a first diode having an anode and having a cathode; and (iii) a second diode having an anode and having a cathode, wherein the first terminal of the alternating-current power supply is for connecting to the workpiece, and wherein the second terminal of the alternating-current power supply is connected to the cathode of the first diode and wherein the anode of the first diode is connected to the first electrode; and wherein the second terminal of the alternating-current power supply is also connected to the anode of the second diode and wherein the cathode of the second diode is connected to the second electrode.

Preferably, in the system, an angle between an axis of the first electrode and an axis of the second electrode is at most about forty-five degrees.

Preferably, the system further includes: (d) a feed mechanism operative to advance the second electrode.

Preferably, the system further includes: (d) an electrode holder operative to hold the first electrode and in electrical contact with the first electrode.

Preferably, the system further includes: (e) a film composed of a material that is thermally conductive and electrically insulating, the film being located between the electrode holder and the separating body.

Preferably, in the system, the film includes a film selected from the group consisting of polyimide films and polyamide films.

Preferably, in the system, the first electrode includes a channel for transporting a cooling fluid.

Preferably, the system further includes: (d) a mechanism operative to move the fluid through the channel.

Preferably, in the system, the separating body includes a channel for transporting a cooling fluid.

Preferably, the system further includes: (d) a mechanism operative to move the fluid through the channel.

Preferably, in the system, the separating body includes a tube, the first electrode being located substantially within the tube.

Preferably, in the system, the tube includes a constricted end.

Preferably, the system further includes: (d) a mechanism for providing a gas having low reactivity to substantially surround a tip of the first electrode.

Preferably, the system further includes: (e) a mechanism to instill a rotational motion in the gas.

Preferably, in the system, the gas is selected from the group consisting of nitrogen, hydrogen, noble gases, and mixtures thereof.

Preferably, the system further includes: (d) a mechanism for providing a shielding gas having low reactivity to substantially surround a portion of the workpiece and portion of the second electrode.

Preferably, the system further includes: (e) a mechanism to instill a rotational motion in the shielding gas.

Preferably, in the system, the shielding gas is selected from the group consisting of nitrogen, hydrogen, carbon dioxide, noble gases, and mixtures thereof.

Preferably, in the system, the first electrode includes a material selected from the group consisting of tungsten, tungsten alloys, molybdenum, and molybdenum alloys.

Preferably, in the system, the second electrode includes a material selected from the group consisting of mild steel, iron, iron alloys, nickel alloys, cobalt alloys, aluminum, aluminum alloys, copper, copper alloys, titanium, and titanium alloys.

Preferably, the system further includes: (d) a magnetic shield located between the first electrode and the second electrode.

Preferably, the system further includes: (d) a control mechanism operative to coordinate operation of the first electrode and the second electrode.

According to the present invention there is provided a method of welding a workpiece according to claim 4.

Preferably, the method includes the further step of: (f) moving the first electrode and the second electrode relative to the workpiece in a manner such that the first electrode precedes the second electrode.

Preferably, in the method, an angle between in axis of the first electrode and an axis of the second electrode is at most about forty-five degrees.

Preferably, in the method, the electric arc between the first electrode and the workpiece is energized in a pulsed fashion.

Preferably, in the method, the electric arc between the second electrode and the workpiece is energized in a pulsed fashion.

According to the present invention, in the method, the electric arc between the first electrode and the workpiece, and the electric arc between the second electrode and the workpiece arc energized in alternation with each other.

Preferably, the method includes the further step of: (f) advancing the second electrode to compensate for consumption thereof.

Preferably, the method includes the further step of: (f) maintaining an electric are between the first electrode and the separating body.

Preferably, in the method, the first electrode includes a channel and the method further includes the step of: (f) transporting a cooling fluid through the channel.

Alternatively, in the method, the separating body includes a channel, and the method further includes the step of: (f) transporting a cooling fluid through the channel.

Preferably, the method further includes the step of: (f) surrounding a tip of the first electrode with a gas having low reactivity.

Preferably, the method further includes the step of: (g) imparting a rotational motion to the gas.

Preferably, in the method, the gas is selected from the group consisting of nitrogen, hydrogen, noble gases, and mixtures thereof.

Preferably, the method further includes the step of: (f) surrounding a portion of the workpiece and a portion of the second electrode with a shielding gas having low reactivity.

Preferably, the method further includes the step of: (g) imparting a rotational motion to the shielding gas.

Preferably, in the method, the shielding gas is selected from the group consisting of nitrogen, hydrogen, carbon dioxide, noble gases, and mixtures thereof.

Preferably, the method includes the further step of: (f) inserting a magnetic shield between the first electrode and the second electrode.

BRIEF DESCRIPTION OF THE DRAWINGS

The invention is herein described, by way of example only, with reference to the accompanying drawings, wherein:

Figure 1 is a graph of wire feed speed in MIG welding as a function of welding current, for carbon-steel electrodes;
Figure 2 is a schematic illustration of a prior-art device combining MIG and plasma welding, according to US Patent No. 3,612,807;
Figure 3a is a schematic illustration of plasma welding according to prior art;
Figure 3b is a schematic illustration of plasma welding according to prior art at high welding speed;
Figure 3c is a schematic illustration of combined MIG and plasma welding according to prior art;
Figure 4 is a schematic illustration of combined MIG and plasma welding not covered by the present invention, illustrating further details;
Figure 5 is a schematic illustration of combined MIG and plasma welding not covered by the present invention, including direct-current power supplies;

Figure 6 is a schematic illustration of combined MIG and plasma welding according to the present invention including an alternating-current power supply.

## DESCRIPTION OF THE PREFERRED EMBODIMENTS

The present invention is of a system that combines plasma welding with MIG welding in a single integrated system.

The discussion below, by way of example only, shows how the present invention may be applied to the construction of systems for welding, and to the welding process itself. The main goal of the proposed invention is to increase productivity of the combined plasma and MIG processes, by enhancing the benefits offered by both methods:

(1) the high power density and deep penetration of plasma arc welding, and
(2) the high arc efficiency and ability to bridge large gaps between workpieces of MIG (GMAW).

This goal is attained by combining in one processing torch both a consumable electrode and a non-consumable electrode, in such a way that the axes of both the non-consumable plasma arc electrode and the consumable (MIG/GMAW) electrode have an acute angle facing the workpiece, and the axes of the electrodes lie in a plane that intersects the workpiece substantially at the weld line. The present invention capitalizes on the major advantages of the plasma arc on the one hand, and the high arc efficiency and rapid metal transfer of MIGGMAW on the other hand. This is achieved by means of the interaction of the plasma arc and the MIG arc.

The principles and operation of a welding system according to the present invention may be better understood with reference to the drawings and the accompanying description.

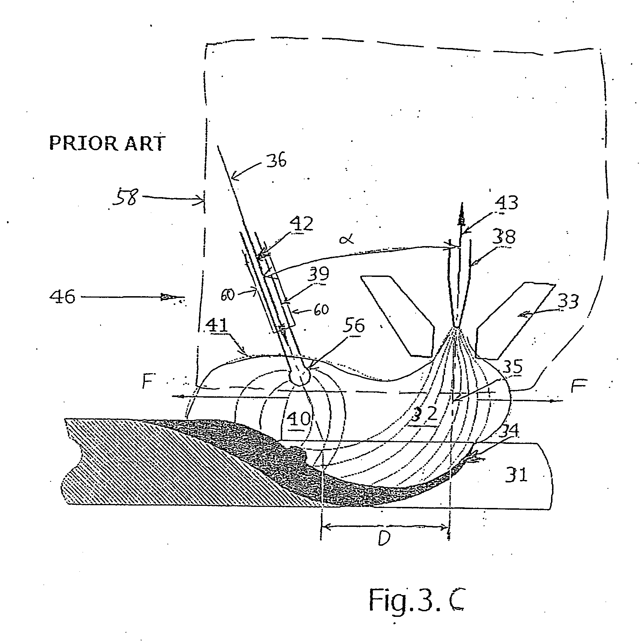

Referring now to the drawings, Figure 3c illustrates schematically a preferred embodiment of a welding system according to the present invention, combining plasma and MIG welding.

Plasma arc 32 burns between nonconsumable electrode 38 and workpiece 31. Plasma arc 32 is constricted by nozzle 33. A MIG arc is established between consumable electrode 39 and workpiece 31. Tip 56 of electrode 39 is immersed in plasma stream 41 created by plasma arc 32.

Combined welding torch 58, including electrodes 38 and 39, and associated components, is moved in the direction of arrow 46 substantially along a surface of workpiece 31. The direction of arrow 46 is known as the welding direction.

Extensive theoretical and practical investigations have shown that penetration depth and welding speed can be substantially increased, as compared with plasma and MIG/GMAW alone or any of the existing prior-art plasma-MIG augmentations, by maintaining an acute angle, α, between axis 35 of plasma arc electrode 38 and axis 36 of MIG electrode 39, and by maintaining spacing, D, between the point were axis 36 of consumable (MIG) electrode 39 crosses the surface of workpiece 31 and the point were axis 35 of non-consumable (plasma) electrode 38 crosses the surface of workpiece 31. The result in some cases is at least a tripling of penetration depth and processing speed, without need for grooving or any other edge preparation technique, as opposed to either plasma welding or MIG/GMAW alone, or in comparison to any prior-art augmented plasma-MIG technology.

The above-mentioned acute angle, α, between axes 35 and 36 of electrodes 38 and 39, and distance, D, between intersections of axes 35 and 36 with workpiece 31 are not obvious or evident from the prior art , and the combinations of acute angle α, and distance D, taught by the present invention provide significant improvements in penetration depth and processing speed. Furthermore, the present invention is based on an understanding of the physical processes taking place in plasma-MIG welding that is entirely different from the understanding underlying the prior art.

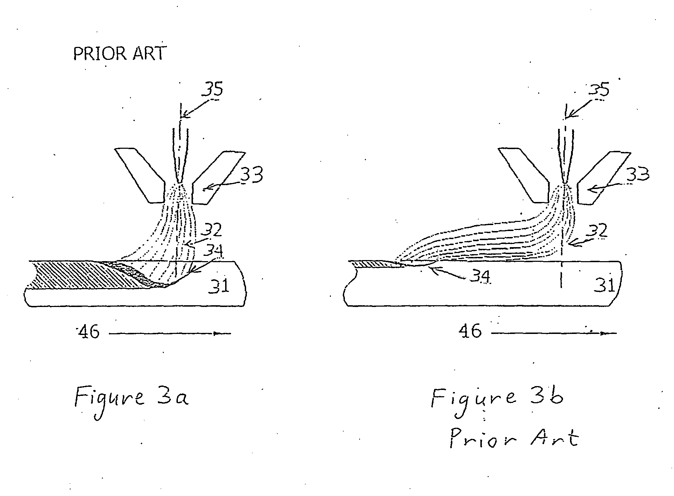

It is well-known to those skilled in the art that when the plasma arc welding speed is too great, weld pool 34 created by plasma arc 32 remains behind, with respect to welding direction 46, the intersection of axis 35 of plasma electrode 38 with the surface of workpiece 31, as illustrated, schematically in Figure 3b, causing undercuts and lack of penetration. Prior-art plasma welding, as illustrated schematically in Figure 3a, provides good welding results, but, depending upon the material being welded, and the thickness thereof, welding speed is usually restricted to less than 1 meter per minute. When plasma arc electrode 38 is negative, as is the preferred mode of operation for plasma arc welding ( see for example, Robert L. O'Brien, Plasma Arc Metalworking Processes, American Welding Society, June, 1967, which is incorporated by reference for all purposes as if fully set forth herein) so as to achieve maximum speed and penetration, and MIG electrode 39 is positive, as is the preferred mode of operation for MIG welding so as to achieve maximum processing speed, minimize spatters, and operate in the spray transfer mode, magnetic forces F, illustrated schematically in Figure 3c, are produced as a result of the interaction between currents 42 and 43 and arcs 32 and 40. These magnetic forces F, due to electric currents running in different directions, cause a deflection of the plasma arc towards the front, with respect to welding direction 46, of welding pool 34, thus compensating for the plasma arc's natural and well-known tendency to fall behind the plasma arc axis 35 during high-speed welding. Hence, there results a substantial increase in rigidity and stability of plasma arc 32, without plasma arc 32 falling excessively behind, with respect to welding direction 46, axis 35 of plasma electrode 38 while welding at high speed. This leads to a substantial increase of the penetration depth and welding speed, thus eliminating the need for edge preparation or grooving, which are necessary for prior-art MIG welding. Magnetic forces F depend upon the angle α, between electrode axes **35** and **36**, and upon the distance D, between the points where the electrode axes **35** and **36** intersect the surface of the workpiece 31.

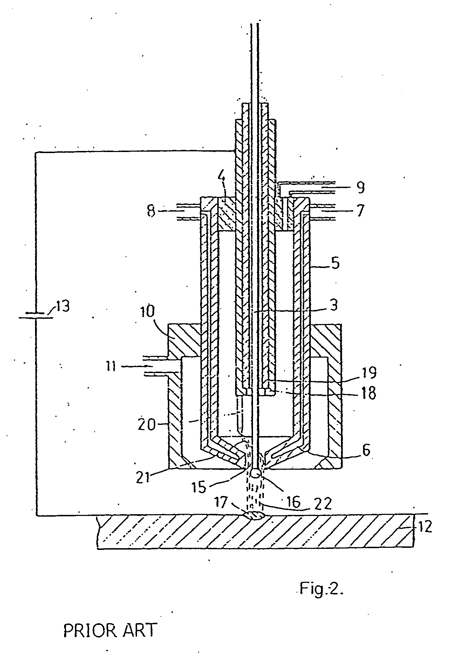

There is also a significant effect of the plasma arc **32** upon the way metal is transferred from consumable electrode **39**. In the present invention plasma arc **32** only affects tip **56** of consumable electrode **39**. In the existing prior-art arrangement of Figure 2 consumable electrode **3** passes through the entire volume of plasma arc **21**, which results in substantial overheating of consumable electrode **39**. Hence, as discussed above, this necessitates a high filler-wire consumption rate, resulting in spattering and excessive deposition of welding metal.

The anode spot is the area on the positive MIG electrode **39** where the current of MIG arc 40 passes from positive MIG electrode **39** to MIG arc **40**.

Due to the influence of the plasma only on tip **56** of consumable MIG electrode **39**, the anode spot of MIG arc **40** remains at a fixed location. This prevents anode spot expansion. Furthermore, the constrained location of the anode spot allows a considerable reduction in the set-back distance of the end of contact tube **60**, through which consumable electrode **39** is fed, from the end of consumable electrode **39**, without overheating of contact tube **60**. This is of considerable practical advantage, because it is easier to feed an electrode **39** over the shorter set-back distance to the precise location of the weld pool. When consumable electrode **39** is not concentric with plasma arc nozzle **33** a more concentrated MIG arc **40** is produced without the rotation effect that occurs in the prior-art system of Figure 2, where positive-polarity MIG electrode **3** is substantially concentric with plasma stream **15**.

The arrangement, in which plasma electrode **38** and MIG electrode **39** are at an acute angle α, with respect to each other, and a distance D, exists between the intersection of plasma electrode axis **35** and the surface of workpiece **31**, and the intersection of MIG electrode axis **36** and the surface of workpiece **31**, is significant and innovative with respect to obtaining the best possible synergy between plasma welding and MIG welding, in that the combined system is much more effective, compared to prior art. This increased effectiveness results in a substantial increase of both processing speed and penetration, and allows welding of metals without the need for edge preparation or grooving. Moreover, in the arrangement of the present invention, the plasma system can be brought closer to the surface of the workpiece, increasing the efficiency of operation because of the greater concentration of heat flux, which in turn results in deep penetration. Hence, it is possible to use single pass welding instead of multipass welding, which substantially improves weld quality, welding process productivity, and economic efficiency. In addition, welds free of spatter and excessive metal are obtained.

A combined method of plasma arc and MIG arc welding is provided. In this method, a plasma arc **32** is maintained, within a flow of inert gas, between an end of a non-consumable electrode **38** and a workpiece. Plasma arc **32** is constricted by a constricting nozzle **33**, and produces a plasma stream, which flows out from orifice **64** of constricted nozzle **33**. Consumable electrode **39** is guided into an area of the plasma stream outside constricting nozzle **33**, and a MIG arc **40** is maintained between tip **56** of consumable electrode **39** and workpiece **31**. This is in contradistinction to what is taught in US Patent No. 3,612,807, illustrated schematically in Figure 2, wherein consumable electrode **3** extends through a much longer portion of plasma stream **15**. In the present invention, non-consumable electrode **38** is of negative polarity, which is a favorable condition for plasma arc welding, and consumable electrode **39** is of positive polarity, which is a favorable condition for MIG welding. Because both arcs **32** and **40** are operating in conditions favorable to their respective types, a substantially wider range of arc currents is allowed, yielding a stable combined process. This provides for a highly productive welding process.

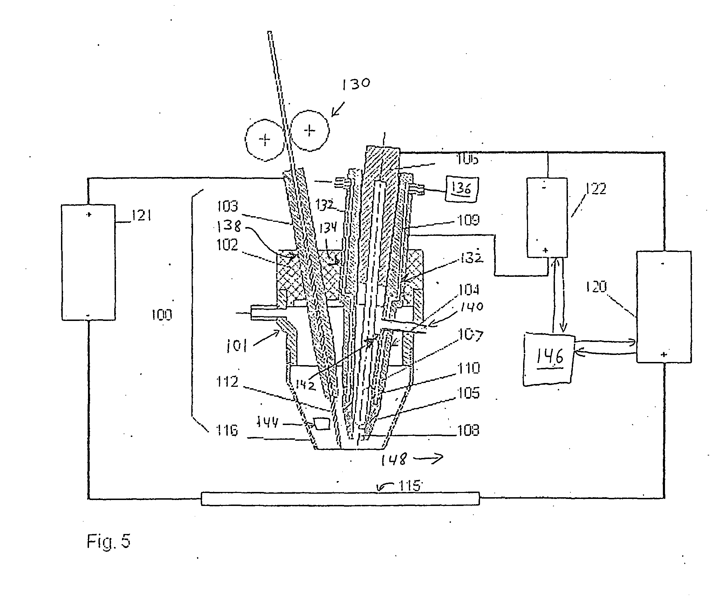

According to a further aspect not covered by the present invention, illustrated schematically in Figure 5, a single processing torch 100 is provided, including a housing **101** with a cover **102** at the upper end of housing **101**, housing **101** also having a shielding nozzle **116** at the lower end of housing **101**. Cover **102** is equipped with a first cavity **134** and a second cavity **138**, cavities **134** and **138** not being parallel to each other. First cavity **134** contains a hollow inner body **104** having a constricting nozzle **105** at its downstream end, and a non-consumable electrode **107** is located within this inner body **104**. There is also provided a port **140** for passing gas having low reactivity through inner body **104**. Suitable gases for this application include, but are not limited to, nitrogen, hydrogen, noble gases, and mixtures thereof. Noble gases include the elements, also known as inert gases, found in column 8 of the Periodic Table of the Elements. Although hydrogen is ordinarily considered quite reactive, hydrogen is of low reactivity with respect to tungsten. Optionally, a mechanism such as vane **142** introduces a rotational motion into the gas.

Second cavity **138** contains a hollow tube **103** which serves to guide a consumable electrode **112** into an outlying region of the plasma stream, so that the tip of consumable electrode **112** lies behind nozzle **105**, with respect to welding direction **148**, and within shielding nozzle **116** at the downstream end of housing **101**, shielding nozzle **116** surrounding the tip of consumable electrode **112** and constricting nozzle **105** of inner body **104**. Thus, consumable electrode **112** and non-consumable electrode **107** are oriented along welding direction **148**, with non-consumable electrode **107** slightly ahead of consumable electrode **112** with respect to welding direction **148**.

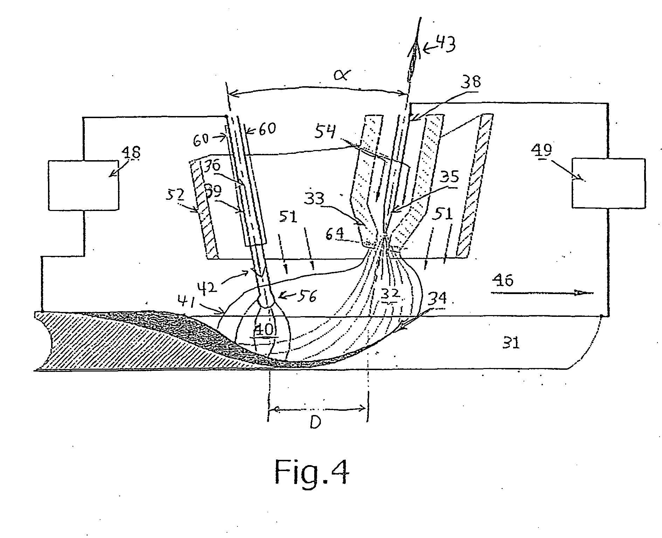

Referring now to Figure 4, a plasma arc **32** is maintained between workpiece **31** and non-consumable electrode **38**, in inert gas flow **54**. Orifice **64 [I don't see "4" or "5" in the figure]** of nozzle **33** constricts plasma arc **32** and directs plasma arc **32** toward workpiece **31**. A consumable electrode **39** is guided into an outlying area of plasma arc **32**, MIG arc **40** being maintained between consumable electrode **39** and workpiece **31**. The negative terminal of a first power supply **49** is connected to non-consumable electrode **38**, and the positive terminal of first power supply **49** is connected to workpiece **31**. The positive terminal of a second power supply **48** is connected to consumable electrode **39**, and the negative terminal of second power supply **48** is connected to the workpiece **31**. Shielding gas **51**, e.g. a mixture of argon and carbon dioxide, flows out through shielding nozzle **52**. Suitable choices for shielding gas **51** include, but are not limited to, nitrogen, hydrogen, carbon dioxide, noble gases, and mixtures thereof. Although hydrogen is ordinarily considered quite reactive, hydrogen is of low reactivity with respect to some metals.

Plasma arc electrode **38** has an axis **35**. Consumable electrode **38** has an axis **36**. Plasma electrode axis **35** and consumable electrode axis **36** lie substantially in a common plane, the plane being substantially perpendicular to the surface of workpiece **31**, and form an acute angle, $\alpha$, with each other. Furthermore, the plasma arc **32** lies at the front, with respect to welding direction **46**, of welding pool **34**.

Plasma stream **41** from orifice **64** is directed towards the front side, with respect to welding direction **46**, of welding pool **34**, passing along the concavity of welding pool **34** and being deflected toward the rear, with respect to welding direction **46**, of welding pool **34**, where metal melted from the tip of consumable electrode **39** has been deposited. MIG arc **40** burns substantially within plasma stream **41**.

A disadvantage of prior-art plasma arc welding is low welding speed, because at high welding speeds the arc is deflected, resulting in deflection of the plasma stream velocity vector away from being normal to the workpiece surface. This decreases penetration depth at high welding speeds, and beyond a particular speed limit destroys welding pool **34**. However, in the present invention, advantage is taken of an electromagnetic interaction between MIG arc current **42** and plasma current **43**. Because these arcs have opposite polarity, this interaction results in deflection of plasma arc **32** towards the front, with respect to welding direction **46**, of welding pool **34** compensating for the deflection of plasma arc **32** toward the back, with respect to welding direction **46**, of welding pool **34** caused by motion of plasma arc **32** along the direction of welding **46**. Hence, under certain conditions, the plasma arc velocity vector is nearly normal with respect to the surface of workpiece **31**, and the plasma arc penetration is maximized, and the plasma arc shows substantial rigidity (stability). This facilitates substantial increases in welding speed and penetration. Because these magnetic forces depend on the arc currents, the distance between the axes of the electrodes, and the angle between the electrodes, it is very important to correctly position the electrodes and properly adjust the currents flowing through the electrodes.

The presence of plasma alters processes at the anode spot of the MIG arc. Therefore, the way in which metal is transferred from the consumable electrode is changed. The result is that drops are more easily removed from the wire end. Thus, the transition current for establishing the spray transfer mode is substantially reduced, as compared with conventional MIG welding technology. In the present invention, the axial velocity of drops travelling towards the workpiece is higher than achievable with conventional MIG welding, the velocity vector being deflected towards the back end, with respect to welding direction **46**, of welding pool **34**. In this situation, drops of molten metal reach the back end, with respect to welding direction **46**, of welding pool **34**, as in the "back hand" technique, wherein the electrode is pointed opposite to the direction of welding, increasing penetration.

Average drop volume is larger than can be achieved by spray transfer in conventional MIG welding. However, the system of the present invention allows welding in any position with respect to gravity because the plasma stream increases the velocity of the drops towards the workpiece. Moreover, larger drop volume prevents overheating of the drops while the drops pass across the arc gap. Preventing or reducing overheating of the drops is a vital factor in obtaining spatter-free welds, as well as improving the metallurgical integrity and quality of the weld.

In high speed welding, the present invention makes it possible to decrease consumption of the consumable electrode (filler wire) per weld length compared to conventional MIG welding, and to increase penetration depth.

The relationship between acute angle $\alpha$, distance D, and the arc currents can be approximately represented by the following equations:

$$0° < \alpha < 45°$$

$$D > K_m R_p [(I_m/I_p) \tan \alpha]^{1/2}$$

$$D < K_v R_p$$

$$1 < K_m < 3$$

$$1 < K_v < 5$$

where:

$\alpha$ = angle between electrode axes
D = distance between points were electrode axes cross workpiece surface
$I_m$ = current of MIG arc
$I_p$ = current of plasma arc
$R_p$ = radius of plasma stream
$K_m$ = a constant of proportionality for the magnetic influence on the MIG arc, and is dependent upon workpiece composition, wire composition, wire diameter, and other factors.
$K_v$ = a constant associated with the shape of the plasma stream near the weld pool surface, and depends upon plasma gas flow rate, the angle between the electrode axes, and other factors.

Figure 5 illustrates an example of a device not covered by the present invention. This embodiment includes a single processing torch **100** of the present invention, including a housing **101**, a cover **102** made of an electrically insulating material and having two cavities. Suitable materials for cover **102** include, but are not limited to, thermally-resistant plastics, and ceramics such as aluminum oxide. A wire guide **103** is located in one cavity of cover **102**. An inner body **104** with a constricting nozzle **105** located at the downstream end of inner body **104**, is located in the second cavity of cover **102**). A cathode holder **106** operative to hold a cathode **107** made of a conductor, such as tungsten, having a high melting point is located within inner body **104**. Other materials suitable for cathode **107** include, but are not limited to, tungsten alloy, molybdenum, and molybdenum alloy. Constricting nozzle **105** is located at the downstream end of inner body **104**, having orifice **108** to constrict the plasma arc. Inner body **104** has a channel **110** operative to transport cooling fluid pumped by pump **136**. Cathode **107** has a tip **134**, and the plasma arc contacts cathode **107** substantially at tip **134** of cathode **107**. Wire guide **103** directs a consumable electrode wire **112** past constricting nozzle **105** to workpiece **115**. Suitable materials for consumable electrode wire **112** include, but are not limited to, mild steel, iron, iron alloys, nickel alloys, cobalt alloys, aluminum, aluminum alloys, copper, copper alloys, titanium, and titanium alloys. Wire **112** is driven through wire guide **103** by a wire feed mechanism **130**. A shielding nozzle **116** at the downstream end of housing **101** surrounds the end of wire **112** and constricting nozzle **105**. A channel **132** in inner body **104** and contiguous with channel **110**, is operative to transport cooling fluid for cooling inner body **104**, cathode holder **106**, and nozzle **105**. Cathode holder **106** has a conical shape and is located in a hole in inner body **104**. Cathode holder **106** is separated from inner body **104** by an electrically insulating film **109** made of a material with high thermal conductivity and able to tolerate temperatures of approximately 200°C. Suitable materials for film **109** include, but are not limited to, polyimide films such as DuPont Kapton™, and polyamide films. Due to the high thermal conductivity and small thickness of insulating film **109** there is good heat transfer from cathode holder **106** to body **104**, allowing the device to operate without special cooling of cathode **107**, thus permitting a simpler design for the device.

Tungsten cathode **107** is connected via cathode holder **106** to the negative terminal of a first direct-current (DC) power supply **120**, also referred to as the plasma power supply **120**. Wire **112** is connected via wire guide **103** to the positive terminal of a second DC power supply **121**, also referred to as the MIG power supply **121**. The positive terminal of first power supply **120** and the negative terminal of second power supply **121** are both connected to workpiece **115**. Preferably, first power supply **120** has a constant-current output characteristic, which provides a stable plasma arc, and second power supply **121** has a constant-voltage output characteristic, so that the length of the MIG arc is self-stabilized, which, in turn, stabilizes the process of wire melting. An optional third, auxiliary, DC power supply **122** is connected across cathode **107** and constricted nozzle **105**. If auxiliary power supply **122** is used, constricted nozzle **105** must be made of a conductive material. Auxiliary power supply **122** maintains a low-current arc between cathode **107** and nozzle **105**. Typical currents for this low current arc range from 2 amperes to 30 amperes. This low-current arc burns before welding begins and provides for preheating of cathode **107**, preventing thermal shock damage to cathode **107** when the main plasma arc starts. In addition, this low-current arc provides a plasma flow out toward the workpiece **115**, facilitating starting of the main arcs.. If optional auxiliary power supply **122** is not used, a high-frequency oscillator, not shown, may be used to facilitate starting of the main arcs, although use of such an oscillator may cause electromagnetic interference problems, and does not prevent thermal shock to cathode **107**.

When operating voltage from first power supply **120** and second power supply **121** is applied to cathode **107** and consumable electrode wire **112**, the voltage is not sufficient to ignite an arc directly between cathode **107** and wire **112**. However, the low-current arc between cathode **107** and nozzle **105** aids in the ignition of an arc between cathode **107** and workpiece **115**, which in turn aids in the ignition of an arc between workpiece **115** and wire **112**. Once these arcs have been ignited, magnetic forces and gas flow prevent direct arcing between cathode **107** and wire **112**.

In some applications, such as welding in vertical or overhead positions, in order to compensate for the effect of gravity on the weld metal it is desirable to reduce heat input. Low heat input allows the molten pool to freeze quickly. In this case, it is desirable that MIG power supply **121** work in pulse mode. The desired pulse duration and pulse peak current depend upon the diameter of wire **112** and the material of which wire **112** is made.

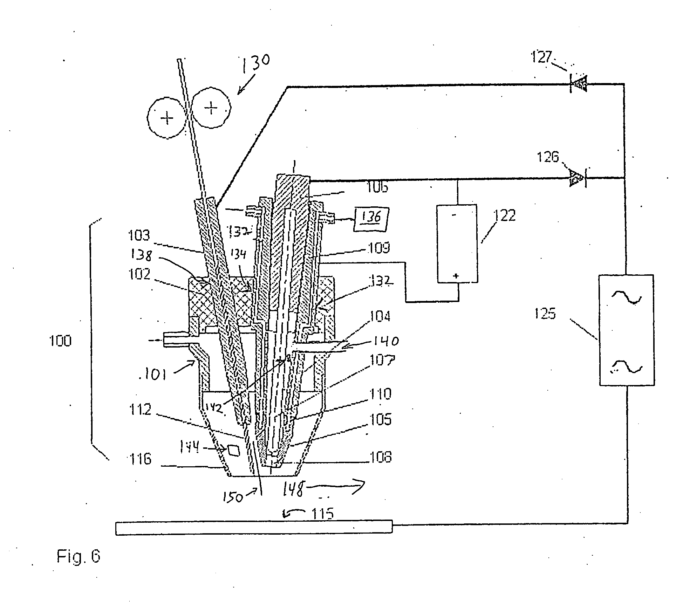

The present invention is illustrated schematically in Figure 6. In this embodiment, an alternating-current (AC) power supply **125** is utilized instead of two of the DC power supplies **120** and **121**. One terminal of AC power supply **125** is connected to workpiece **115**, and the other terminal of AC power supply **125** is connected to cathode **107** via a first diode **126** and cathode holder **106**, and to consumable wire **112** via a second diode **127** and wire guide **103**. The anode of first diode **126** is connected to cathode holder **106** and the cathode of first diode **126** is connected to AC power supply **125**. The cathode of second diode **127** is connected to wire guide **103** and the anode of second diode **127** is connected to AC power supply **125**. Thus, the MIG arc current and the plasma arc current flow during alternate halves of the AC cycle. This reduces the magnetic interaction between the two arcs. This in turn reduces the heat input and allows a reduction in weld pool length by reducing the distance between the plasma arc and the MIG arc.

According to the present invention, a magnetic shield **150** is located between nozzle **105** and consumable electrode **112**. MIG arc currents greater than 300 amperes can lead to magnetic forces that deflect the plasma arc too far, such that the plasma arc impinges on nozzle **105**, overheating nozzle **105** and reducing the efficiency of energy transfer from the plasma arc to workpiece **115**. Magnetic shield **150** reduces the magnetic field in the region of the plasma arc, thus reducing the influence of the MIG arc on the plasma arc.

In another embodiment of the present invention, the mechanism for supplying inert gas for the plasma arc includes a mechanism, such as vane **142** for imparting a rotational motion to the gas. Similarly, a mechanism such as vane **144** may be used to impart a rotational motion to the shielding gas surrounding the MIG arc.

Optionally, embodiments include, as shown schematically in Figure 5, a control mechanism **146** operative to coordinate the operation of the various parts of the system. Such a control mechanism **146** may be operative to control one or more parameters including, but not limited to, power supply voltages, power supply currents, gas pressures, gas flow rates, cooling fluid pressure, cooling fluid flow rate, cooling fluid temperature, consumable electrode feed rate, and welding speed. Such a control system **146** may also be operative to sense one or more parameters including, but not limited to, operator inputs, power supply voltages, power supply currents, arc voltages, arc currents, gas pressures, gas flow rates, cooling fluid pressure, cooling fluid flow rate, cooling fluid temperature, consumable electrode feed rate, electrode temperatures, and welding speed. Sensing of parameters may be incorporated in one or more feedback loops for adjustment of controlled parameters. For simplicity, control system **146** is shown as being connected only to power supply **120** and power supply **122**, although other connections are possible and within the scope of the present invention.

While the invention has been described with respect to a limited number of embodiments, it will be appreciated that many variations, modifications and other applications of the invention may be made according to the scope of appended claims.

**Claims**

1. A system for welding a workpiece (115) comprising:

   a. a combined torch that includes a consumable electrode (112) and a non-consumable electrode (107) positioned so that their respective axes form an acute angle ($\alpha$) and so that arcs (32,40) initiated from the two electrodes (107, 112) intersect a workpiece (115) plane to define an arc impingement point distance (D); and
   b. a magnetic shield (150) inserted between the two electrodes (107, 112) and used for controlling the arc impingement point distance (D) during welding; and **characterized in that** the system further comprises:
   c. a power source for imposing on the consumable electrode (112) a first electrical potential relative to the workpiece (115) and for imposing on the non-consumable electrode (107) a second electrical potential relative to the workpiece (115), the second electrical potential being opposite to the first electrical potential, the power source including:

      (i) an alternating-current power supply (125) having a first terminal and a second terminal that differ in phase, the first terminal being for connecting to the workpiece (115) and the second terminal being for connecting to the electrodes (107, 112),
      (ii) a first diode (126) wherethrough the second terminal is connected to the non-consumable electrode (112) via a cathode holder (103), and
      (iii) a second diode (127) wherethrough the second terminal is connected to the consumable electrode (112) via a wire guide (103) of the consumable electrode (112),

   wherein the two diodes (126, 127) are oriented oppositely relative to the second terminal.

2. The system of claim 1, wherein the consumable electrode (112) is a metal-inert-gas (MIG) electrode and wherein the non-consumable electrode (107) is an electrode selected from the group consisting of a plasma arc electrode and a tungsten-inert-gas (TIG) electrode.

3. The system of claim 1, wherein the acute angle ($\alpha$) is in range of 0 to 30 degrees and wherein the arc impingement point distance (d) is smaller than 30 cm.

4. A method of welding a workpiece (115) comprising the steps of:

a. providing two, first (112) and second (107), electrodes with respective axes, arranged spatially so as to define an acute angle ($\alpha$) therebetween;
b. establishing respective electric arcs between each electrode (107, 112) and the workpiece 115), the arcs having an arc impingement point distance (D); and
c. welding the workpiece (115) while controlling the arc impingement point distance (D) using a magnetic shield (150) between the two electrodes (107, 112);

the method **characterized in that** the establishing of the respective electric arcs alternates between establishing a respective electric arc between the first electrode (112) and the workpiece (115) by:

a. providing an alternating-current power supply having a first terminal and a second terminal that differ in phase;
b. connecting the first terminal to the workpiece (115);
c. imposing a first electrical potential relative to the workpiece (115) on the first electrode (112) by connecting the second terminal to the first electrode (112) via a first diode (126) and a cathode holder (103); and
d. establishing a respective electric arc between the second electrode (107) and the workpiece (115) by imposing a second electrical potential relative to the workpiece (115) on the second electrode (107) by connecting the second terminal to the second electrode (107) via a second diode (127) and a wire guide (103) of the second electrode (107), with the two diodes (126, 127) being oriented oppositely relative to the second terminal so that the second electrical potential is opposite to the first electrical potential, and so that the workpiece (115) is welded while alternating between the establishing of the two electrical arcs.

5. The method of claim 4, wherein the step of providing first (112) and second (107) electrodes includes providing a consumable first electrode (112) and a nonconsumable second electrode (107).

6. The method of claim 5, wherein providing a consumable electrode (112) includes providing a metal-inert-gas (MIG) electrode and wherein providing a non-consumable electrode (107) includes providing an electrode selected from the group consisting of a plasma arc electrode and a tungsten-inert-gas (TIG) electrode.

**Patentansprüche**

1. Ein System zum Schweißen eines Werkstücks (115), das Folgendes umfasst:

a. einen kombinierten Brenner, der eine abschmelzende Elektrode (112) und eine nicht-abschmelzende Elektrode (107) einschließt, positioniert derart, dass ihre jeweiligen Achsen einen spitzen Winkel ($\alpha$) bilden, und so, dass Bögen (32, 40), die von den zwei Elektroden (107, 112) ausgehen, eine Werkstücks-(115)Ebene schneiden, um einen Bogen-Auftreffspunkt-Abstand (D) zu bestimmen, und
b. eine magnetische Abschirmung (150), eingefügt zwischen die zwei Elektroden (107, 112) und verwendet, um beim Schweißen den Bogen-Auftreffspunkt-Abstand (D) zu steuern, und **dadurch gekennzeichnet, dass** das System weiter Folgendes umfasst:
c. eine Energiequelle, um an die abschmelzende Elektrode (112) ein erstes elektrisches Potential relativ zum Werkstück (115) anzulegen und um an die nicht-abschmelzende Elektrode (107) ein zweites elektrisches Potential relativ zum Werkstück (115) anzulegen, wobei das zweite elektrische Potential dem ersten elektrischen Potential entgegengesetzt ist und die Energiequelle Folgendes einschließt:

(i) eine Wechselstromquelle (125) mit einer ersten Klemme und einer zweiten Klemme, die sich in der Phase unterscheiden, wobei die erste Klemme zur Verbindung mit dem Werkstück (115) dient und die zweite Klemme zur Verbindung mit den Elektroden (107, 112) dient,
(ii) eine erste Diode (126), wodurch die zweite Klemme über einen Kathodenhalter (103) mit der nicht-abschmelzenden Elektrode (112) verbunden ist, und
(iii) eine zweite Diode (127), wodurch die zweite Klemme über eine Drahtführung (103) der abschmelzenden Elektrode (112) mit der abschmelzenden Elektrode (112) verbunden ist,

wobei die zwei Dioden (126, 127) relativ zur zweiten Klemme entgegengesetzt ausgerichtet sind.

2. Das System gemäß Anspruch 1, wobei die abschmelzende Elektrode (112) eine Metall-Inertgas-(MIG-)Elektrode ist und wobei die nicht-abschmelzende Elektrode (107) eine Elektrode, gewählt aus der Gruppe bestehend aus einer Plasma-Elektrode und einer Wolfram-Inertgas-(WIG-)Elektrode, ist.

3. Das System gemäß Anspruch 1, wobei der spitze Winkel ($\alpha$) im Bereich von 0 bis 30 Grad liegt und wobei der Bogen-Auftreffspunkt-Abstand (d) kleiner ist als 30 cm.

4. Ein Verfahren des Schweißens eines Werkstücks (115), das folgende Schritte umfasst:

   a. Bereitstellung von zwei, ersten (112) und zweiten (107), Elektroden mit jeweiligen Achsen, die räumlich so angeordnet sind, dass sie einen spitzen Winkel ($\alpha$) dazwischen bestimmen,
   b. Aufbau entsprechender Lichtbögen zwischen jeder Elektrode (107, 112) und dem Werkstück (115), wobei die Bögen einen Bogen-Auftreffspunkt-Abstand (D) haben, und
   c. Schweißen des Werkstücks (115) bei gleichzeitiger Steuerung des Bogen-Auftreffspunkt-Abstands (D) mit Hilfe einer magnetischen Abschirmung (150) zwischen den zwei Elektroden (107, 112),

   wobei das Verfahren **dadurch gekennzeichnet ist, dass** der Aufbau der jeweiligen Lichtbögen alterniert zwischen dem Aufbau eines entsprechenden Lichtbogens zwischen der ersten Elektrode (112) und dem Werkstück (115) durch:

   a. die Bereitstellung einer Wechselstromversorgung mit einer ersten Klemme und einer zweiten Klemme, die sich in der Phase unterscheiden,
   b. die Verbindung der ersten Klemme mit dem Werkstück (115),
   c. Anlegen eines ersten elektrischen Potentials relativ zum Werkstück (115) an die erste Elektrode (112) durch Verbindung der zweiten Klemme mit der ersten Elektrode (112) über eine erste Diode (126) und einen Kathodenhalter (103), und
   d. Aufbau eines entsprechenden Lichtbogens zwischen der zweiten Elektrode (107) und dem Werkstück (115) durch Anlegen eines zweiten elektrischen Potentials relativ zum Werkstück (115) an die zweite Elektrode (107) durch Verbinden der zweiten Klemme mit der zweiten Elektrode (107) über eine zweite Diode (127) und eine Drahtführung (103) der zweiten Elektrode (107), wobei die zwei Dioden (126, 127) relativ zur zweiten Klemme entgegengesetzt ausgerichtet sind, so dass das zweite elektrische Potential dem ersten elektrischen Potential entgegengesetzt ist, und so dass das Werkstück (115) während des Alternierens zwischen dem Aufbau der zwei Lichtbögen geschweißt wird.

5. Das Verfahren gemäß Anspruch 4, wobei der Schritt der Bereitstellung erster (112) und zweiter (107) Elektroden die Bereitstellung einer ersten abschmelzenden Elektrode (112) und einer zweiten nicht-abschmelzenden Elektrode (107) einschließt.

6. Das Verfahren gemäß Anspruch 5, wobei die Bereitstellung einer abschmelzenden Elektrode (112) die Bereitstellung einer Metall-Inertgas-(MIG-)Elektrode einschließt und wobei die Bereitstellung einer nich-tabschmelzenden Elektrode (107) die Bereitstellung einer Elektrode einschließt, die gewählt ist aus der Gruppe bestehend aus einer Plasma-Elektrode und einer Wolfram-Inertgas-(WIG-)Elektrode.

**Revendications**

1. Système pour souder une pièce d'oeuvre (115), comprenant :

   a. une torche combinée, comprenant une électrode consommable (112) et une électrode non consommable (107), positionnées de manière que leurs axes respectifs forment un angle ($\alpha$) aigu et de manière que des arcs (32, 40) initiés à partir des deux électrodes (107, 112) coupent une pièce d'oeuvre (115) plane, pour définir une distance de point d'impact d'arc (D) ; et
   b. un bouclier magnétique (150), inséré entre les deux électrodes (107, 112) et utilisé pour commander la distance de point d'impact d'arc (D) durant le soudage ; et **caractérisé en ce que** le système comprend en outre :
   c. une source d'énergie, pour appliquer à l'électrode consommable (112) un premier potentiel électrique par rapport à la pièce d'oeuvre (115) et pour appliquer à l'électrode non consommable (107) un deuxième potentiel électrique par rapport à la pièce d'oeuvre (115), le deuxième potentiel électrique étant opposé au premier potentiel électrique, la source d'énergie comprenant :

      (i) une source d'énergie à courant alternatif (125), ayant une première borne et une deuxième borne dans la phase est différente, la première borne étant prévue pour connexion à la pièce d'oeuvre (115) et la deuxième borne étant prévue pour connexion aux électrodes (107, 112),
      (ii) une première diode (126),par l'intermédiaire de laquelle la deuxième borne est connectée à l'électrode non consommable (112) via un support de cathode (103), et (iii) une deuxième diode (127), par l'intermédiaire de laquelle la deuxième borne est connectée à l'électrode consommable (112), via un guide-fil (103) de l'électrode consommable (112),

dans lequel les deux diodes (126, 127) sont orientées en sens opposé par rapport à la deuxième borne.

2. Système selon la revendication 1, dans lequel l'électrode consommable (112) est une électrode métal-sous-gaz-inerte (MIG) et dans lequel l'électrode non consommable (107) est une électrode sélectionnée dans le groupe composé d'une électrode à arc plasma et d'une électrode tungstène-sous-gaz-inerte (TIG).

3. Système selon la revendication 1, dans lequel l'angle ($\alpha$) aigu est dans une fourchette comprise entre 0 et 30 degrés et dans lequel la distance de point d'impact d'arc (d) est inférieure à 30 cm.

4. Procédé pour souder une pièce d'oeuvre (115), comprenant les étapes consistant à :

   a. fournir deux électrodes, une première (112) et une deuxième (107), avec des axes respectifs agencés pour définir entre eux un angle ($\alpha$) aigu ;
   b. établir des arcs électriques respectifs entre chaque électrode (107, 112) et la pièce d'oeuvre (115), les arcs ayant une distance de point d'impact d'arc (D) ; et
   c. souder la pièce d'oeuvre (115) tout en commandant la distance de point d'impact d'arc (D) en utilisant un bouclier magnétique (150) entre les deux électrodes (107, 112) ;

   le procédé étant **caractérisé en ce que** l'établissement des arcs respectifs alterne entre l'établissement d'un arc électrique respectif entre la première électrode (112) et la pièce d'oeuvre (115), par :

   a. fourniture d'une alimentation en énergie à courant alternatif ayant une première borne et une deuxième borne, dont les phases diffèrent ;
   b. connexion de la première borne à la pièce d'oeuvre (115) ;
   c. application d'un premier potentiel électrique par rapport à la pièce d'oeuvre (115) sur la première électrode (112), par connexion de la deuxième borne à la première électrode (112), via une première diode (126) et un support de cathode (103) ; et
   d. établissement d'un arc respectif entre la deuxième électrode (107) et la pièce d'oeuvre (115), en appliquant un deuxième potentiel électrique par rapport à la pièce d'oeuvre (115) sur la deuxième électrode (107), par connexion de la deuxième borne à la deuxième électrode (107), les deux diodes(126, 127) étant orientées en sens opposé par rapport à la deuxième borne, de manière que le deuxième potentiel électrique soit opposé au premier potentiel électrique, et, ainsi, que la pièce d'oeuvre (115) soit soudée tout en alternant entre l'établissement des deux arcs électriques.

5. Procédé selon la revendication 4, dans lequel l'étape de fourniture de première (112) et deuxième (107) électrodes comprend la fourniture d'une première électrode consommable (112) et d'une deuxième électrode non consommable (107).

6. Procédé selon la revendication 5, dans lequel la fourniture d'une électrode consommable (112) inclut la fourniture d'une électrode métal-sous-gaz-inerte (MIG) et dans lequel la fourniture d'une électrode non consommable (107) inclut la fourniture d'une électrode sélectionnée dans le groupe composé d'une électrode à arc plasma et d'une électrode tungstène-sous-gaz-inerte (TIG).

Fig. 1 - Typical Welding Currents Versus Wire Feed Speeds for Carbon Steel Electrodes

Prior Art

Fig.2.

PRIOR ART

PRIOR ART

Figure 3a

Figure 3b
Prior Art

PRIOR ART

Fig.3. C

Fig.4

Fig. 5

Fig. 6

EP 1 581 359 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4291220 A
- US 3612807 A
- US 4016397 A
- US 4039800 A
- US 4220844 A
- US 4205215 A
- US 4234778 A
- US 4142090 A

**Non-patent literature cited in the description**

- American Welding Society Welding Handbook. American Welding Society, 1991
- *American Welding Society Welding Handbook,* 1991, vol. 2
- **Robert L. O'Brien.** Plasma Arc Metalworking Processes. American Welding Society, June 1967